(19) Europäisches Patentamt
European Patent Office
Office européen des brevets

(11) Publication number: **0 092 578**
**B1**

# (12) EUROPEAN PATENT SPECIFICATION

(45) Date of publication of patent specification: **20.09.89**

(51) Int. Cl.$^4$: **C 09 D 11/18,** C 08 K 5/01, C 08 F 293/00

(21) Application number: **82903561.7**

(22) Date of filing: **22.10.82**

(86) International application number:
**PCT/US82/01509**

(87) International publication number:
**WO 83/01625 11.05.83 Gazette 83/11**

## (54) ERASABLE INKS CONTAINING THERMOPLASTIC BLOCK COPOLYMERS.

(30) Priority: **05.11.81 US 318305**
**05.11.81 US 318306**
**05.11.81 US 318307**

(43) Date of publication of application:
**02.11.83 Bulletin 83/44**

(45) Publication of the grant of the patent:
**20.09.89 Bulletin 89/38**

(84) Designated Contracting States:
**DE FR GB**

(56) References cited:
**GB-A-1 092 563**
**GB-A-1 429 934**
**GB-B-2 001 554**
**US-A-3 784 587**
**US-A-3 787 531**
**US-A-3 875 105**
**US-A-3 972 848**
**US-A-3 993 613**
**US-A-4 039 629**
**US-A-4 059 554**
**US-A-4 097 290**

(73) Proprietor: **The Gillette Company**
**Prudential Tower Building**
**Boston, Massachusetts 02190 (US)**

(72) Inventor: **FERGUSON, Edward John**
**300 Central Street**
**Avon, MA 02322 (US)**
Inventor: **FARMER, III Robert Franklin**
**706 West Montgomery Street**
**Rockville, MD 20850 (US)**
Inventor: **RIESGRAF, Diane A.**
**24 Whitewood Drive**
**Morris Plains New Jersey 07952 (US)**

(74) Representative: **Baillie, Iain Cameron et al**
**c/o Ladas & Parry Isartorplatz 5**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

(56) References cited:

US-A-4 101 482
US-A-4 101 484
US-A-4 104 326
US-A-4 216 131
US-A-4 216 132
US-A-4 229 338
US-A-4 244 862
US-A-4 350 787
US-H- 959 010

No relevant documents have been disclosed
DERWENT ABSTRACT 76579 X/41 PUBLISHED AUGUST 1976 TAGUCHI (J51096626)
DERWENT ABSTRACT 88825 C/50 PUBLISHED OCTOBER 1980 DENKI KAGAKU KOGYO (J55137166)

## Description

The present invention relates to an erasable ink, and more particularly, to an erasable ink containing a thermoplastic block copolymer.

In choosing a writing instrument, line intensity and erasability must be taken into account. Until recently, the choice was between these two factors since it was impossible to have both high line intensity and high erasability in the same writing instrument. Writing instruments such as pencils possess high erasbility (i.e., the written line can be removed readily) but are relatively low in line intensity (i.e., the contrast between the written line and the paper is low). Because of this, a xerographic copy of a document written in pencil is typically a poor reproduction. In contrast, writing instruments such as ball point pens, fountain pens, and soft- or porous-type pens produce written lines which are relatively intense but lack any significant degree of erasbility without damage to the underlying writing surface, or require additional material to mask the unwanted lines.

Accordingly, the prior art contains numerous attempts at writing instruments containing inks which produce a written line of high intensity, and yet are erasable for at least the first few hours after being placed upon the writing surface. This combination produces a written document having all the desirable attributes of both systems, and within a short period of time after being written, possess the permanency typically desired in written documents.

One such system is described in U.S. Patent 3,875,105. That patent describes an erasable writing medium suitable for use in ball point pens having a discontinuous phase of a solid colorant and a homogeneous continuous phase including a matrix material having cohesive properties exceeding its property to adhere to the substratum being written upon. The ink consists of a pigment, stabilized with adsorbed surfactant, dispersed in a multicomponent solvent system containing a polyvinyl methyl ether elastomer. On transfer to paper, the low boiling toluene evaporates into the air or penetrates into the paper causing a viscosity increase and enhancement of the elastic characteristics of the pigment dispersion. Adhesion between the elastomer and pigment remains greater than that between the elastomer and paper until certain components of the solvent system migrate into the paper, at which time polymer adhesion increases and erasability decreases. The erasability of the ink is stated to depend in part on the rapid evaporation of at least one of the components of the continuous phase. Accordingly, the volatile component is stated to be one preferably with an evaporation rate of 3 to 15 on a relative numerical scale on which ethyl ether is assigned an evaporation rate of 1, such as toluene which is stated to have a rate of 6.1. The volatile component is employed in a range from 24.0 to 29.0%. The line intensity of that ink is dependent upon the relative quantity of pigment used. As stated in that patent, it may be necessary to dispense the ink in a pressurized ball pen depending upon the relative quantity of pigment used since at higher levels of pigment the ink may not flow with sufficient rapidity through the feed passageways of the conventional, gravity-fed ballpoint pen. Moreover, in an ink of such a high level of volatile component, some means must be provided to prevent the volatile component from evaporating into the atmosphere which would increase the viscosity of the ink while in the pen.

GB—A—2001554 discloses an adhesive tape comprising an adhesive composition consisting essentially of thermoplastic and elastomeric A—B block copolymers wherein the A-blocks are thermoplastic and the B-blocks are elastomeric.

The thermoplastic and elastomeric A—B block copolymers which are disclosed consist essentially of linear or radial A—B-block copolymers, mixtures of the aforesaid A—B—A block copolymers with simple A—B block copolymers, and in some cases the simple A—B block copolymers themselves.

Also described in GB—A—2001554 are radial A—B—A polymers of the type described in United States Patent No. 3,281,383 which conform to the following general formula: $(A—B—)_nX$, wherein A is a thermoplastic block polymerized from styrene or styrene homologues, B is an elastomeric block derived from conjugated dienes or lower alkenes, and X is an organic or inorganic connecting molecule with a functionality of 2—4 as described in U.S. Patent No. 3,281,383.

The simple A—B block copolymers employed in the adhesive layer of the tape of GB—A—2001554 are of the type described in United States Patent Nos. 3,519,585 and 3,787,531 and comprise A and B-blocks derived from the monomers the same as used for A—B—A copolymers.

U.S. Patent 4,097,290 describes a ballpoint writing instrument capable of writing with an intense line which is easily erasable by mechanical means for an initial period of several hours but eventually becomes non-erasable. These properties are attained by an ink composition containing certain specific rubbers and volatile solvents which control erasability. The rubbers employed are natural or of a chemical structure essentially duplicating that of natural rubber. In addition, the ink contains a volatile low boiling organic solvent having a boiling point less than 108°C. and exhibiting 100% evaporation within 60 minutes, and a high boiling organic liquid solvent having a boiling point of greater than 300°C. The volatile low boiling organic solvent is included to rapidly increase the viscosity of the ink in the written line thereby minimizing penetration by the ink into the paper. Although the ink yields a very intense line with good erasability for the first few hours after it is written, it suffers from the same disadvantage as that set forth previously for U.S. Patent 3,875,105. Namely, it possesses a relatively high concentration of a low boiling, rapidly vaporizable solvent, and a relatively high concentration of pigment such that means for subjecting the ink to superatmospheric pressure is necessary to facilitate the flow and supply of ink to the ball. In addition, the

rubber must be milled prior to its incorporation into the ink to produce an average molecular weight of between 100,000 and 900,000 and preferably between 400,000 and 750,000. The milling process is somewhat difficult to control in that milling too rapidly, or for too long a time, will produce rubber particles unsuitable for use in the ink.

There are often also problems in addition to time and expense when ink must be supplied under pressure. If the ball doesn't fit almost perfectly in the ball seat, point bleed can occur, and will become worse as the ball seat wears with writing. Writing smoothness is also affected by pressurization because the ball must be pushed into its seat, and the ink pressure must be counteracted in order to get ink flow. Another major disadvantage of prior art erasable ink is that the written line is easily smeared.

Accordingly, a need exists for an erasable ink for use in ballpoint pens which will produce a line of high erasability and high line intensity, which does not depend upon a high level of volatile solvent, does not smear, is readily prepared without the necessity of controlled milling of the rubber component, and requires little or no pressurization.

The present invention comprises an erasable ink composition containing a thermoplastic block copolymer, a pigment, and a solvent for the copolymer.

It has now been found that an erasable ink producing a written line of high line intensity and high erasability can be produced without employing a high volatility solvent or high levels of pressurization, by the use of thermoplastic block copolymers in place of the matrix material U.S. Patent 3,875,105 or the rubbers of U.S. Patent 4,097,290.

The block copolymers of the present invention are best described as thermoplastic elastomers which have an ABA, $(AB)_nX$, or (—AB)— arrangement of A (thermoplastic) and B (rubbery) blocks wherein X is an organic or inorganic connecting molecule with a functionality of 2—4 and n is a number corresponding to the functionality of X. The hard A blocks are glassy and consist of polystyrene; the soft B blocks must be elastomeric and consist of polybutadiene, polyisoprene or polyethylene-polybutylene blocks. When the hard segments are incompatible with the soft segments, the domains or regions of hard block act as reinforcing physical cross-links for the rubbery matrix. In contrast to chemically cross-linked rubbers, the physical network is thermally reversible. When the polymer is heated above the $T_g$ (or $T_m$) of the hard block, the hard blocks soften and allow the rubber to flow and to be processed as a thermoplastic.

The manufacture of block copolymer thermoplastic elastomers depends upon the type and arrangement of the blocks. For example, styrene-butadiene ABA and $(AB)_nX$ block copolymers are conveniently prepared by alkyllithium initiated anionic polymerization. The preferred block copolymers of the present invention are those made from styrene-diene comonomers having a block arrangement of ABA or $(AB)_nX$ such as those sold under the trade names Kraton (Shell Chemical) and Solprene (Phillips Chemical Company).

A preferred linear block copolymer (ABA) for use in the present invention is a styrene-isoprene-styrene block copolymer. Each molecule consists of an individual chain of three blocks, — an elastomeric block in the center (isoprene) and a thermoplastic block on each end (styrene). The polystyrene end blocks form a discrete phase which locks the continuous phase isoprene midblocks into an elastomeric network. Because mechanical cross-links rather than chemical cross-links are present, the copolymers can be dissolved in many common hydrocarbon solvents without premastication. By dissolving the polystyrene domains, the network is unlocked permitting mixing with other materials. Since such rubbers are low in molecular weight (typically less than 100,000 to about 150,000), the solutions produced have low viscosity even with high solids content.

Another type of preferred elastomer is a "radial" $(AB)_nX$ block copolymer consisting of styrene and isoprene blocks. In a linear arrangement ABA such as that described above, each molecule contains two styrene blocks at the ends of an isoprene midblock. In contrast, the preferred radial structure contains four isoprene midblocks which are all joined at a common center (X), with a styrene block at the outer end of each isoprene block. Compared to linear block copolymers, generally the radial block copolymers at similar molecular weight and monomer ratio produce lower solution viscosities. For example, the viscosity of a 20% and 25% by weight solution in toluene of a linear polymer having a molecular weight of about 150,000 is 600 centipoises and 1600 centipoises respectively. In contrast, solutions of a radial polymer having a molecular weight of between 175,000 and 275,000 at the same concentration in toluene have viscosities of 570 centipoises and 1650 centipoises respectively. The typical range of molecular weights of radial polymers is about 150,000 to about 300,000.

While the use of either linear or radial block copolymers along results in an acceptable ink, it is preferred to blend the two together in a range of radial to linear of about 7:1 to 1:1. The preferred blending is in a ratio of about 3 to 1 radial to linear.

Block copolymers having butadiene or isoprene midblocks are preferred, although block copolymers having ethylene-butylene midblocks can also be used in pressurized systems. The range of concentration for the block copolymer is between about 10% and about 30% by weight. Higher concentrations can be used but contribute little to erasability and result in rapidly increasing viscosity with a concomitant increase in pressurization requirements. The ratio of diene to styrene is typically between about 60:40 and about 90:10.

The molecular weight of the rubbers employed in the present invention is low, typically less than 300,000, as compared to general purpose rubbers such as styrene-butadiene rubber, polyisoprene rubber,

and natural rubber even after natural rubber is broken down by milling. Natural rubbers used in the prior art typically have molecular weights between about 400,000 and about 750,000. With block copolymers, breakdown is neither desired nor required. Instead, the polystyrene domains are softened by solvating which permits the polymer to flow under shear. Dissolution and solvent release are quite rapid with such block copolymers. They dissolve or disperse readily in common hydrocarbon solvents to yield high solids, low viscosity solutions. Depending upon which solvent is used, the interaction between hard (glassy) and soft (rubbery) segments of a thermoplastic block will be affected. This in turn strongly influences the viscoelastic behavior of the rubber.

Three general factors must be considered in preparing inks according to the present invention: solubility parameter, volatility, and critical pigment concentration (CPC). These factors require greater consideration when preparing a pen needing low levels (less than 1.0 psi) or no pressurization. Each of these factors will be discussed generally before focusing on how each affects pressurization requirements.

In determining which solvents to employ in the ink of the present invention, the solubility parameter (represented by $\delta$), which is a measure of the total forces holding the molecules of a solid or a liquid together, is a useful guide. It has the units of $(cal/cm^3)^{1/2}$. Every compound is characterized by a specific value of solubility parameter. Materials having about the same solubility parameter tend to form homogeneous mixtures or to be miscible. Those with different solubility parameters tend to form separate layers or to be mutally insoluble. Discussions of solubility parameter concepts are presented in (1) Encyclopedia of Polymer Science and Technology, Interscience, New York (1965), Vol. 3, Pg. 833; (2) Encyclopedia of Chemical Technology, Interscience, New York (1971), Sup. Vol., Pg. 889; (3) Polymer Handbook, J. Brandrup and E. H. Immergut, Interscience, New York (1966), pgs. IV-337 to IV-341; and (4) I. T. Smith, Review of Current Literature on the Paint and Allied Industries, Vol. XXXVI, No. 247, (January 1963), Pgs. 1—4.

The block copolymers in the present invention will dissolve in most organic solvents having solubility parameters between about 7 and about 10.5. In the case of inks that will be subject to pressurization, low boiling, high volatility solvents such as toluene, naphtha, and the other low boiling solvents in U.S. Patent 4,097,290 can be advantageously employed. In such an embodiment, the solubility parameter of the organic solvent combination need only fall within the outer limits of the solubility parameter of about 7 to about 10.5.

It will often be desirable to use a combination of solvents in the ink of the present invention since the resulting mixed solvent system acts as a solvent for the polymer, as a dispersant for the pigment, and as a plasticizer for the polymer or polymers. The formula to use in determining the solubility parameter for such a mixed solvent system is

$$\delta = \sum_{i=1}^{n} \text{mole fraction}_i * \delta_i$$

The value for a particular solvent is readily obtained by consulting one of the reference texts above.

To give sufficient intensity to the written line produced by the ink of the present invention, finely divided pigmenting materials are added. By finely divided, reference is made to particle sizes within the range of about 0.01 micrometer to about 5 micrometers, the lower figure being a limitation as to visibility and the upper figure being limited by ballpoint clearance; that is, the gap between the ball and the retaining lip of the socket.

The pigment is typically added to the other components of the ink in the form of a dispersion containing 50—60% of dioctyl phthalate. A typical blue ink would contain 12.6% Victoria Blue having a particle size of about 0.025 microns and about 5.7% Phthalocyanine Blue having a particle size of about 0.015 micrometer. Unless an unpressurized ink is desired as discussed below, the dispersion would then be diluted with an equal volume of toluene or other similar solvent.

For every pigment/solvent system, as well as for every pigment/solvent/polymer system, there is a critical pigment concentration" (CPC), below which no pressure is required to initiate flow. Above the CPC, constant pressure is required for pigment/solvent systems and the pressurization of pigment/solvent/polymer systems increases in proportion to increases in pigment concentration, signifying a pigment-polymer interaction. Each particular pigment, polymer and solvent combination has its own CPC. Thus it is difficult to predict what the CPC for any particular system will be.

For inks requiring no pressurization, low volatility solvents are employed. Low volatility solvents are defined as those having a value of not greater than 10 on a scale of 0 to 100 where butyl acetate is used as a standard and has a value of 100 as measured according to the National Printing Ink Research Institute Raw Materials Handbook, Volume 1, Organic Solvents. Page 9 of that volume provides data for various solvents.

To produce a pen requiring a low level (less than 7 kPa) or no pressurization, each of the above factors must be controlled within a selectively narrow range, and care must be exercised in choosing the block copolymer or copolymers. Each of these factors will now be discussed in connection will refills requiring little or no pressurization.

Block copolymers having butadiene or isoprene midblocks, and mixtures of radial and linear block copolymers are preferred when preparing refills requiring little or no pressurization. For gravity flow with

no pressurization, such block copolymers must be used in conjunction with an organic solvent or a mixture of organic solvents having a solubility parameter between about 8.1 and about 8.7. Where no pressurization is involved, such solvent or solvents must also possess low volatility as defined above. Preferred low volatility solvents for use in inks of the present invention are set forth in Table 1 below. One or more solvents from Group 1 are mixed with one or more solvents from Group 2 to produce a combination having a solubility parameter in the appropriate range.

Finally, the CPC must be considered. It has generally been found that the CPC of most pigment/solvents/polymer systems is 9—10% or less. Choosing the exact pigment concentration is readily accomplished by one skilled in the art after selecting a mixed solvent system and a particular block copolymer.

TABLE 1

| Solvent & manufacturer | Chemical description | Solubility parameter | Boiling point, °C | Evaporation Rate[a] |
|---|---|---|---|---|
| | Group 1 | | | |
| Isopar M (Exxon) | Heavy isoparaffinic naphtha $-C_{11}—C_{17}$ | 7.2 | 207 | <10 |
| MagieSol 47 Oil (Magie) | Hydrotreated middle distillate | 7.2 | 238 | <1 |
| 1102 Oil (Witco) | Light vacuum gas oil | 7.2 | 266 | <1 |
| MagieSol 44 Oil (Magie) | Hydrotreated middle distillate | 7.5 | 226 | 2 |
| 1108 Oil (Witco) | Hydrotreated middle distillate | 7.3 | 280 | <1 |
| Norpar 13 (Exxon) | Normal paraffin $-C_{11}—C_{17}$ | 7.4 | 229 | <10 |
| Dodecane | $C_{12}$ hydrocarbon | 7.8 | 216 | med. low |
| | Group 2 | | | |
| Aromatic 150 (Exxon) | Heavy aromatic naphtha | 8.7 | 183 | <10 |
| DXE (Gulf) | 1,1-di(ortho-xylyl)ethane | 8.8 | 335 | v. low |
| Han (Exxon) | Aromatic middle distillate extract | 8.9 | 169 | <10 |
| DOP | dioctylphthalate | 8.9 | 384 | ~0 |

[a] Relative evaporation rates where butyl acetate=100

Pressurization is required for the erasable inks of the present invention which are too viscous to flow at a sufficient rate under the force of gravity alone. Prior art erasable inks often require 69 kPa (10 psi) to produce an acceptable written line. In contrast, the inks of the present invention typically require less than 7 kPa (1.0 psi) to produce a written line of similar quality. The amount of pressure required depends on several factors including temperature, the particle size of the pigment, the polymer employed, and the gap between the ball and the lip of the ball-retaining socket. The pressure for any particular combination is readily determined by one skilled in the art. Various means for applying appropriate pressure are well known in the prior art including U.S. Patent 3,000,354; U.S. Patent 3,099,252; and U.S. Patent 3,425,779.

A preferred additive to the ink of the present invention is polybutene to enhance the cohesive strength of particularly styrene-isoprene-styrene elastomers. The polybutene has no effect on pressurization or line intensity, but increases the erasability of inks when used in concentrations up to about 10% by weight. Polybutenes are a series of butylene polymers composed predominantly of high molecular weight mono-olefins (85—98%), the balance being isoparaffins. Preferred polybutenes have a viscosity of about

3026—3381 centistokes at 99°C (210°F) and average molecular weight of about 2060. Polybutenes are made by polymerizing an isobutylene-rich butene stream with a metal halide catalyst. The polymer backbone structure resembles polyisobutylene, although more 1- and 2-butenes are incorporated in the lower molecular-weight fractions. The olefin structure is predominantly the trisubstituted type ($R—CH=CR_2$). Only minor amounts of vinylidene

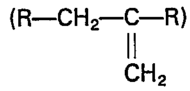

and terminal vinyl ($R—CH=CH_2$) structures are present. A preferred polybutene is sold under the trade name Indopol H-1500 by Amoco Chemicals Corporation, 200 East Randolph Drive, Chicago, IL 60601.

Another preferred additive is poly-alpha-methylstyrene which can be used alone or in conjunction with polybutenes. With this additive, line intensity is unchanged, but erasability is increased with increasing concentration. However, the pressure to write increase proportionately with concentration such that poly-alpha-methylstyrene is useful only in pressurized inks and is typically used in concentrations up to about 10% by weight.

It has been found that the addition of polybutene and poly-alpha-methylstyrene dramatically reduces the tendency to smearing of prior art erasable inks which is seen initially after writing.

Erasability can be evaluated by manual erasure and visual observation, but this involves personal factors such as pressure applied, size of surface being erased, etc. A more accurate evaluation can be conducted by applying the trace by a standard writing test method in which the paper is advanced beneath the writing instrument at a rate of 11.5 mm. per 10 cycles and at the same rate under an erasing head provided with an Eberhard-Faber Pink Pearl Pencil Eraser #101 (Shore A34 Durometer hardness, ASTM D 2240), applied to the paper bearing the trace under a load of 375 grams upon a surface measuring 9 mm. by 23.8 mm. in the direction of travel, the erasing head reciprocating at a rate of 80 cycles per minute, the length of each stroke being 63.5 mm. Each trace is thus subjected to 7 cycles of erasing and results can be visually observed or rated by photometer readings.

Smearing can be tested by taking Ross micro wax #1365, obtained from Frank B. Ross Company, Inc., 6—10 Ash Street, Jersey City, New Jersey and forming it into plugs the size of a standard eraser, placing it into an erasing machine as described above and running over a fresh tracing five cycles. This produces a reasonably uniform smear which can then be placed into a reflectometer and measured against the reflectance of the same paper without ink on it.

The equation used to determine the percent smearing is

$$\%\ \text{smearing} = \frac{R_u - R_s}{R_u - R_m} \times 100$$

where $R_u$ is the reflectance of the unmarked paper, $R_m$ is the reflectance of the marked paper, and $R_S$ is the reflectance of the smeared area.

While the major components of the ink have been stressed above, the presence in the ink of additives such as corrosion inhibitors, lubricants such as lauric acid or stearic acid, preservatives, parting compounds (between ink in a reservoir and a gaseous pressurizing agent), and dispersing agents, is not precluded.

The invention will be further illustrated by the following examples.

Example I

An ink employing a radial styrene-isoprene-styrene block copolymer sold under the trademark Solprene 418 by Phillips Chemical Company, Borger, Texas, having a styrene/isoprene ratio of 15/85 was urged to prepare an erasable ink requiring no pressurization. 20 Grams of the block copolymer was dissolved in 49.8 grams of dodecane and 10.2 grams of dixylylethane. To this was added 20 grams of a pigment dispersion of 31.6% Victoria Blue, 14.1% Phthalo Blue, and 54.2% dioctyl phthalate. The combination of solvents produced a solubility parameter of 8.1. The resulting ink produced a written trace with acceptable line intensity and erasability.

Example II

Example I was repeated with 10 grams of a linear block copolymer having a styrene/isoprene ratio of 14/86 sold by Shell Chemical Company, Houston, Texas, and a mixed solvent system of 67.2 grams of isobutyl isobutyrate having a solubility parameter of 8.1, 2.8 grams of methyl ethyl ketone having a solubility parameter of 9.3, and 20 grams of the pigment dispersion of Example I. The resulting combination of solvents had a solubility parameter of 8.7. The resulting ink produced a written trace with acceptable line intensity and erasability.

Example III

An ink employing a styrene-ethylene/butylene-styrene block copolymer sold under the trademark

Kraton G1650 by Shel Chemical Company, Houston, Texas, having a styrene to rubber ratio of about 28 to 72 was prepared by mixing 10% by weight of block copolymer with 50% by weight of toluene. The dissolved polymer was then mixed with a pigment dispersion consisting of 60% by weight of toluene, 21.7% dioctyl phthalate, 12.6% Victoria Blue and 5.7% Phthalocyanine Blue. The resulting ink was placed in a conventional refill cartridge and pressurized to a pressure of 4 kPa (0.6 psi). The resulting ink produced a written trace with acceptable line intensity and moderate erasability.

Example IV

Example III was repeated with a styrene-isoprene-styrene block copolymer sold under the trademark Kraton 1101 by Shell Chemical Company, Houston, Texas, having a styrene to rubber ratio of 30 to 70 in place of the styrene-ethylene/butylene-styrene block copolymer. The resulting ink produced a written trace with acceptable line intensity and good erasability.

Example V

A refill capable of writing without pressurization was prepared employing an ink containing the following ingredients by weight: 4.0% Indofast Violet; 5.0% Kraton 1107, a linear styrene-isoprene-styrene block copolymer having a styrene/isoprene ratio of 14/86 sold by Shell Chemical Company, Houston, Texas; 15.0% Solprene 423, a radial styrene-isoprene-styrene block copolymer having a styrene/isoprene ratio of 15/85; 5.0% Indopol H 1500, a polybutene sold by Amoco Chemicals Co., Chicago, Illinois; 6% dioctyl phthalate; and a mixed solvent of 49% 1,1-di(orthoxylyl) ethane and 16% MagieSol 44 to produce a $\delta$ of approximately 8.4. The resulting ink produced a written line of good line intensity and good erasability.

Example VI

A refill requiring a pressurization of about 0.3 psi and having good line intensity and good erasability was produced by the following formulation:

| Ingredients | %, w/w |
|---|---|
| Kraton 1107 | 5.0 |
| Solprene 423 | 15.0 |
| Indopol 1500 | 5.0 |
| Poly-alpha-methylstyrene | 6.0 |
| Aromatic 150<br>MagieSol 44 | q.s. to $\delta = 8.4$ |
| Victoria Blue | 15.0 |
| Dioctyl phthalate | 15.0 |

Examples VII & VIII

Examples VII and VIII illustrate the beneficial effect of polybutene and poly-alpha-methylstyrene on smearing tendency.

Ink composition (percent by weight)

| | Example VII | Example VIII |
|---|---|---|
| Solprene 423 | 16.2 | 14.7 |
| Kraton 1107 | 5.4 | 4.9 |
| Indopol H-1500 | — | 3.0 |
| Resin 18-210[(1)] | — | 6.0 |
| Lauric acid | 1.4 | 1.1 |
| Stearic acid | 0.5 | 0.4 |
| Toluene | 26.5 | 19.5 |
| Dioctyl phthalate | 27.1 | 27.1 |
| BT-264D[(2)] | 15.8 | 15.8 |
| BT-427D[(3)] | 7.1 | 7.1 |

[(1)] Poly-alpha-methylstyrene sold by Amoco Chemicals Corp., Chicago, Illinois.
[(2)] Victoria Blue sold by E. I. DuPont, Wilmington, Delaware.
[(3)] Phthalocyanine Blue sold by E. I. DuPont, Wilmington, Delaware.

The inks of Examples VII and VIII were compared using the smearing test described above. The smearing tendency of the ink of Example VIII was about two-thirds that of Example VII and the inks of the prior art.

**Claims**

1. An erasable ink for use in a ball-point pen and comprising a pigmented organic solvent solution of a polymeric material characterized by said solution including a thermoplastic block copolymer having glassy A (thermoplastic) blocks and B (rubbery) blocks having an arrangement consisting of ABA, $(AB)_nX$, or (—AB)— wherein X is an organic or inorganic connecting molecule with a functionality of 2—4 and n is a number corresponding to the functionality of X, and said thermoplastic blocks consist of polystyrene blocks, said rubbery blocks consist of polybutadiene, polyisoprene or polyethylene-polybutylene blocks, the ratio of said rubbery blocks to said thermoplastic blocks is from 60:40 to 90:10, and the solubility parameter of said organic solvent is from 7 to 10.5.

2. An ink according to claim 1, characterized in that the block copolymer is a styrene-isoprene-styrene, styrene-butadiene-styrene, or styrene-ethylene/butylene-styrene block copolymer.

3. An ink according to claim 2, characterized in that said block copolymer is a linear styrene-isoprene-styrene or styrene-butadiene-styrene block copolymer.

4. An ink according to claim 2, characterized in that the ratio of styrene to isoprene is about 30:70.

5. An ink according to claim 2, characterized in that the ratio of styrene to butadiene is about 14:86.

6. An ink according to any one of claims 1 to 5, characterized in that the thermoplastic block copolymer is a mixture of radial and linear thermoplastic block copolymers.

7. An ink according to claim 6, characterized in that the ratio of linear to radial block copolymer is between 1:1 and 1:7, and preferably is about 1:3.

8. An ink according to claim 6 or 7, characterized in that each of said block copolymers is a styrene-isoprene-styrene block copolymer.

9. An ink according to any one of the preceding claims, characterized in that the block copolymer is present in a concentration by weight between 10% and 30%.

10. An ink according to any one of the preceding claims, characterized in that particles of pigment are dispersed in dioctylphthalate.

11. An ink according to any one of the preceding claims, characterized in that the solvent has a solubility parameter between 8.1 and 8.7.

12. An ink according to any one of the preceding claims, characterized in that said solvent is toluene or hexane.

13. An ink according to any one of the preceding claims, characterized by additionally comprising polybutene and/or poly-alpha-methylstyrene.

14. An ink according to claim 13, characterized in that polybutene is present at less than 10% by weight, or poly-alpha-methylstyrene is present at less than 10% by weight.

15. An ink according to any one of the preceding claims, characterized in that the concentration of particles of pigment is less than 9% by weight.

16. An ink according to any one of the preceding claims, characterized by comprising between 10% and 30% by weight of the thermoplastic block copolymer, less than the critical pigment concentration of particles of pigment, and between 71% to 85% by weight of a low volatility solvent having a solubility parameter between 8.1 and 8.7.

17. An ink according to claim 16, characterized in that the solvent has a volatility of not greater than 10 on a scale where butyl acetate has a volatility of 100.

18. An ink according to claim 16, characterized in that the solvent is a mixed solvent system with a first solvent of the mixed solvent system having a solubility parameter between 7.2 and 7.8, and a second solvent of the mixed solvent system having a solubility parameter between 8.7 and 8.9.

**Patentansprüche**

1. Radierbare Farbpaste für einen Kugelschreiber mit einer pigmentierten Lösung einer polymeren Substanz in einem organischen Lösungsmittel, dadurch gekennzeichnet, daß die Lösung ein thermoplastisches Blockcopolymer mit glasartigen (thermoplastischen) Blöcken A und gummiartigen Blökken B in einer Anordnung ABA, $(AB)_nX$ oder (—AB)— aufweist, wobei X ein organisches oder anorganisches Verbindungsmolekül mit einer Funktionalität von 2 bis 4 oder eine der Funktionalität von X entsprechende Zahl ist, die thermoplastischen Blöcke aus Polystyrolblöcken, und die gummiartigen Blöcke aus Polybutadien-, Polyisopren- oder Polyethylen-Polybutylen-Blöcken bestehen, das Verhältnis der gummiartigen Blöcke zu den thermoplastischen Blöcken 60:40 bis 90:10 ist und der Löslichkeitsparameter des organischen Lösungsmittels 7 bis 10,5 beträgt.

2. Farbpaste nach Anspruch 1, dadurch gekennzeichnet, daß das Blockcopolymer ein Styrol-Isopren-Styrol, Styrol-Butadien-Styrol- oder Styrol-Ethylen/Butylen-Styrol-Blockcopolymer ist.

3. Farbpaste nach Anspruch 2, dadurch gekennzeichnet, daß das Blockcopolymer ein lineares Styrol-Isopren-Styrol- oder Styrol-Butadien-Styrol-Blockcopolymer ist.

4. Farbpaste nach Anspruch 2, dadurch gekennzeichnet, daß das Verhältnis von Styrol zu Isopren etwa 30:70 ist.

5. Farbpaste nach Anspruch 2, dadurch gekennzeichnet, daß das Verhältnis von Styrol zu Butadien etwa 14:86 ist.

6. Farbpaste nach einem der Ansprüche 1 bis 5, dadurch gekennzeichnet, daß das thermoplastische Blockcopolymer ein Gemisch von radialen und linearen thermoplastischen Blockpolymeren ist.

7. Farbpaste nach Anspruch 6, dadurch gekennzeichnet, daß das Verhältnis von linearen zu radialen Blockcopolymer zwischen 1:1 und 1:7 und vorzugsweise etwa 1:3 beträgt.

8. Farbpaste nach Anspruch 6 oder 7, dadurch gekennzeichnet, daß jedes der Blockcopolymere ein Styrol-Isopren-Styrol-Blockcopolymer ist.

9. Farbpaste nach einem der vorhergehenden Ansprüche, dadurch gekennzeichnet, daß das Blockcopolymer in einer Konzentration zwischen 10 und 30 Gew.% vorhanden ist.

10. Farbpaste nach einem der vorhergehenden Ansprüche, dadurch gekennzeichnet, daß Pigmentteilchen in Dioctylphthalate dispergiert sind.

11. Farbpaste nach einem der vorhergehenden Ansprüche, dadurch gekennzeichnet, daß das Lösungsmittel einen Löslichkeitsparameter zwischen 8,1 und 8,7 hat.

12. Farbpaste nach einem der vorhergehenden Ansprüche, dadurch gekennzeichnet, daß das Lösungsmittel Toluol oder Hexan ist.

13. Farbpaste nach einem der vorhergehenden Ansprüche, dadurch gekennzeichnet, daß sie zusätzlich Polybuten und/oder Polyalphamethylstyrol enthält.

14. Farbpaste nach Anspruch 13, dadurch gekennzeichnet, daß Polybuten in einer Menge von weniger als 10 Gew.% oder Polyalphamethylstyrol in einer Menge von weniger als 10 Gew.% vorhanden ist.

15. Farbpaste nach einem der vorhergehenden Ansprüche, dadurch gekennzeichnet, daß die Pigmentteilchen in einer Konzentration von weniger als 9 Gew.% vorhanden sind.

16. Farbpaste nach einem der vorhergehenden Ansprüche, dadurch gekennzeichnet, daß sie 10 bis 30 Gew.% des thermoplastischen Blockcopolymers, weniger als die kritische Pigmentkonzentration Pigmentteilchen und 71 bis 85 Gew.% eines Lösungsmittels enthält, das eine geringe Flüchtigkeit und einen Löslichkeitsparameter zwischen 8,1 und 8,7 besitzt.

17. Farbpaste nach Anspruch 16, dadurch gekennzeichnet, daß auf einer Skala, auf der Butylacetat die Flüchtigkeit 100 hat, das Lösungsmittel eine Flüchtigkeit von höchstens 10 hat.

18. Farbpaste nach Anspruch 16, dadurch gekennzeichnet, daß das Lösungsmittel ein gemischtes

Lösungsmittelsystem ist, das ein erstes Lösungsmittel mit einem Löslichkeitsparameter zwischen 7,2 und 7,8 und ein zweites Lösungsmittel mit einem Löslichkeitsparameter zwischen 8,7 und 8,9 enthält.

**Revendications**

1. Encre effaçable pour utilisation dans un stylo à bille et comprenant une solution pigmentée dans le solvant organique d'une matière polymère, caractérisée en ce que ladite solution comprend un copolymère séquencé thermoplastique ayant des séquences vitreuses (thermoplastiques) A et des séquences (caoutchouteuses) B suivant un agencement consistant en ABA, $(AB)_nX$ ou (—AB)—, dans lequel X est une molécule organique ou minérale de liaison ayant une fonctionnalité de 2 à 4 et n est un nombre correspondant à la fonctionnalité de X, et lesdites séquences thermoplastiques sont des séquences de polystyrène, lesdites séquences caoutchouteuses sont le polybutadiène, le polyisoprène ou des séquences polyéthylène-polybutylène, le rapport desdites séquences caoutchouteuses auxdites séquences thermoplastiques étant de 60:40 à 90:10 et le paramètre de solubilité dudit solvant organique étant de 7 à 10,5.

2. Encre selon la revendication 1, caractérisée en ce que le copolymère séquencé est un copolymère styrène-isoprène-styrène, styrène-butadiène-styrène ou styrène-éthylène/butylène-styrène.

3. Encre selon la revendication 2, caractérisée en ce que ledit copolymère séquencé est un copolymère séquencé linéaire styrène-isoprène-styrène ou styrène-butadiène-styrène.

4. Encre selon la revendication 2, caractérisée en ce que le rapport du styrène à l'isoprène est d'environ 30:70.

5. Encre selon la revendication 2, caractérisée en ce que le rapport du styrène au butadiène est d'environ 14:86.

6. Encre selon l'une quelconque des revendications 1 à 5, caractérisée en ce que le copolymère séquencé thermoplastique est un mélange de copolymères séquencés thermoplastiques radial et linéaire.

7. Encre selon la revendication 6, caractérisée en ce que le rapport du copolymère séquencé linéaire au copolymère séquencé radial est compris entre 1:1 et 1:7, et est, de préférence, d'environ 1:3.

8. Encre selon la revendication 6 ou 7, caractérisée en ce que chacun desdits copolymères séquencés est un copolymère séquencé styrène-isoprène-styrène.

9. Encre selon l'une quelconque des revendications précédentes, caractérisée en ce que le copolymère séquencé est présent en une concentration pondérale comprise entre 10 et 30%.

10. Encre selon l'une quelconque des revendications précédentes, caractérisée en ce que les particules du pigment sont dispersées dans le phtalate de dioctyle.

11. Encre selon l'une quelconque des revendications précédentes, caractérisée en ce que le solvant présente un paramètre de solubilité entre 8,1 et 8,7.

12. Encre selon l'une quelconque des revendications précédentes, caractérisée en ce que ledit solvant est le toluène ou l'hexane.

13. Encre selon l'une quelconque des revendications précédentes, caractérisée en ce qu'elle contient en outre du polybutène et/ou polyalpha-méthylstyrène.

14. Encre selon la revendication 13, caractérisée en ce que le polybutène est présent en une concentration inférieure à 10% en poids ou le poly-alpha-méthylstyrène est présent en une concentration inférieure à 10% en poids.

15. Encre selon l'une quelconque des revendications précédentes, caractérisée en ce que la concentration des particules de pigment est inférieure à 9% en poids.

16. Encre selon l'une quelconque des revendications précédentes, caractérisée en ce qu'elle comprend de 10 à 30% en poids du copolymère séquencé thermoplastique, moins de la concentration pigmentaire critique des particules de pigment et de 71 à 85% en poids d'un solvant peu volatil ayant un paramètre de solubilité compris entre 8,1 et 8,7.

17. Encre selon la revendication 16, caractérisée en ce que le solvant présente une volatilité qui n'est pas supérieure à 10 sur une échelle dans laquelle l'acétate de butyle a une volatilité de 100.

18. Encre selon la revendication 16, caractérisée en ce que le solvant est un système solvent mixte, le premier solvant du système solvent mixte ayant un paramètre de solubilité compris entre 7,2 et 7,8 et un second solvant du système solvant mixte ayant un paramètre du solubilité compris entre 8,7 et 8,9.